Europäisches Patentamt

European Patent Office

Office européen des brevets

(11) Publication number: **0 182 319**
**A2**

## EUROPEAN PATENT APPLICATION

(21) Application number: 85114560.7

(22) Date of filing: 16.11.85

(51) Int. Cl.⁴: **H 01 G 9/08**

(30) Priority: 19.11.84  JP 243775/84
19.11.84  JP 243776/84

(43) Date of publication of application: 28.05.86
Bulletin 86/22

(84) Designated Contracting States: DE FR GB

(71) Applicant: Matsushita Electric Industrial Co., Ltd., 1006, Oaza Kadoma, Kadoma-shi Osaka-fu, 571 (JP)

(72) Inventor: Nasu, Kazuhiko, 23-5, Shodaiminamimachi 1-chome, Hirakata-shi Osaka-fu (JP)
Inventor: Kenmochi, Kazuei, 1-709, 5, Makinokitamachi, Hirakata-shi Osaka-fu (JP)
Inventor: Iwamoto, Shigeyoshi, 68-15, Koaza Ichinokubo Oaza Terada, Joyo-shi Kyoto-fu (JP)
Inventor: Morikawa, Takahiro, 1-37, Maruyama Iwayama Ujitabaramachi, Tsuzuki-gun Kyoto-fu (JP)
Inventor: Sakairi, Tadashi, 7-28, Hoshidayamate 4-chome, Katano-shi Osaka-fu (JP)

(74) Representative: Eisenführ & Speiser, Martinistrasse 24, D-2800 Bremen 1 (DE)

(54) Electrolytic capacitor and method for the manufacture of the same.

(57) An aluminium electrolytic capacitor comprising a capacitor element constituted by a coil of aluminium foils and an electrolyte-impregnated separator sandwiched between the aluminium foils, and a pair of electroconductive members connected at one end with the respective aluminium foils. The capacitor element is covered by a UV cured coating with the electroconductive members extending outwardly of the UV cured coating, and is in turn encased in a casing made of thermosetting resin. The electroconductive members extend outwards through the casing for external electric connection.

ELECTROLYTIC CAPACITOR AND
METHOD FOR THE MANUFACTURE OF THE SAME

BACKGROUND OF THE INVENTION

The present invention relates to an aluminum electrolytic capacitor in chip form and a method for manufacturing the same.

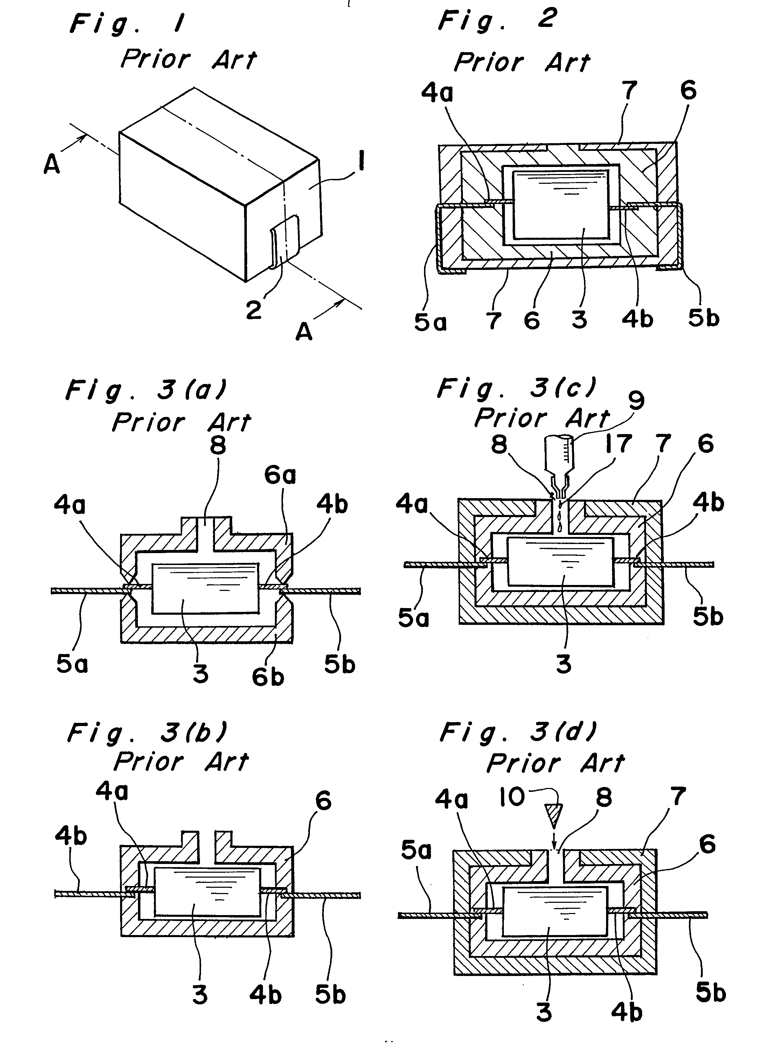

With the advent of the age of miniaturization of electric component parts as well as some electric appliances, it is a recent trend to fabricate an aluminum electrolytic capacitor in chip form so that it can be directly bonded on a hybrid integrated circuit. Japanese Laid-open Patent Publication No. 58-67018, published in 1983, discloses a chip-type aluminum electrolytic capacitor of generally rectangular configuration suited for face bonding on a printed circuit board or the like, such as shown in Fig. 1 of the accompanying drawings. The internal structure of this prior art chip-type aluminum electrolytic capacitor shown in Fig. 1 is illustrated in Fig. 2 in cross-sectional representation taken along the line A-A in Fig. 1.

As shown in Figs. 1 and 2, the prior art capacitor comprises a generally rectangular casing, generally identified by 1, of synthetic resin, a coiled capacitor element 3 in the form of a coil of strip-like aluminum foils with a similarly strip-like separator sandwiched between these aluminum foils, a pair of electroconductive leads 4a and 4b connected at one end with, and drawn outwardly from, the respective aluminum foils, and terminal members 5a and 5b soldered at one end to the respective leads 4a and 4b. The casing 1 is substantially of a double-walled structure comprising an inner casing 6 accommodating the capacitor element 3 therein with the soldered connections between the leads 4a and 4b and the terminal members 5a and 5b embedded in the wall defining the inner casing 6, which casing 6 is in turn encased by an outer casing 7. In this assembled condition, the terminal members 5a and 5b extend outwardly through the wall defining the outer casing 7 in opposite directions endwise of the casing 1 and bent twice so as to terminate at the bottom of the casing 1, thereby providing respective terminals 2 for external electric connection with circuit wirings or conductors.

The aluminum foils coiled with the separator sandwiched therebetween constitute anode and cathode electrodes, respectively. The inner casing 6 is made of thermoplastic material such as, for example, polypropylene, polyphenylene oxide (known as Noryl®), vinyl, PBT or PPS, whereas the outer casing 7 is made of thermosetting material such as, for example, epoxy resin.

The prior art capacitor of the construction shown in and described with reference to Figs. 1 and 2 is manufactured in a manner shown sequentially in Figs. 3(a) to 3(d).

The capacitor element 3 with the leads 4a and 4b connected with the respective terminal members 5a and 5b is enclosed within a space defined between inner casing halves 6a and 6b made of thermoplastic resin as shown in Fig. 3(a), it being to be noted that only the upper casing half 6a is formed with a gate 8 through which an electrolyte is poured into the space confined by the casing halves 6a and 6b as will be described later. The casing halves 6a and 6b are subsequently bonded together by the use of, for example, an ultrasonic sealing technique to complete the inner casing 6 as shown in Fig. 3(b).

The assembly shown in Fig. 3(b) is, as shown in Fig. 3(c), encased by a layer of thermosetting resin which forms the outer casing 7. Thereafter, a quantity of electrolyte 17 is injected into the interior of the inner casing 6 from an electrolyte dispenser 9 through the gate 8 to permit the capacitor element 3 to be immersed in a pool of electrolyte, and then, the gate 8 is fluid-tightly sealed by a plug 10, made of the same material as the material for the inner casing 6a, by the use of, for example, an ultrasonic sealing technique. The complete capacitor is obtained after the subsequent bending of the terminal members 5a and 5b to provide the terminals 2 as shown in Fig. 1.

As hereinabove discussed, the manufacture of the prior art chip-type aluminum electrolytic capacitor is complicated and time-consuming. Moreover, since the gate 8 is closed by the plug 10 subsequent to the pouring of the electrolyte into the interior of the inner casing 6, no satisfactory seal can be obtained at the interface between the plug 10 and that portion of the inner casing 6 around the gate 8 and, therefore, it often occurs that, when the capacitor is being mounted on, for example, a printed circuit board with the terminals 2 soldered to conductors on the printed circuit board, the electrolyte within the inner casing 6 may expand thermally under the influence of heat evolved during the soldering to such an extent as to result in the leakage of the electrolyte. The insufficient seal may also constitute a cause of the leakage of the electrolyte during the storage of the capacitor.

SUMMARY OF THE INVENTION

Accordingly, the present invention has been developed with a view to substantially eliminating the above discussed problems inherent in the prior art chip-type aluminum electrolytic capacitor and the method for the manufacture of the same, and has for its essential object to provide an improved chip-type aluminum electrolytic capacitor which is completely sealed, less susceptible to leakage of the electrolyte even during the soldering process and, therefore, reliable in performance.

Another important object of the present invention is to provide an improved method for manufacturing the capacitor of the type referred to above, which is simple and can ensure high productivity of the capacitor.

According to the present invention, there is provided a chip-type aluminum electrolytic capacitor which comprises a capacitor element comprising a coil of strip-like aluminum foils with a similarly strip-like, electrolyte-impregnated separator sandwiched between the aluminum foils, and a pair of electroconductive members rigidly connected at one end with the respective aluminum foils. The capacitor element is completely covered by a UV cured coating, except for respective free end portions of the electro-conductive members, and is then encased in a casing made of thermosetting resin with the free end portions of the electroconductive member protruding exteriorly of the casing.

The UV curable coating material which, when irradiated with UV light, forms the UV cured coating is preferably of a type capable of exhibiting a high heat insulating property when transformed into the solid UV cured coating.

Since the capacitor element employs the electrolyte-impregnated separator for separating the aluminum foils for the anode and cathode electrodes from each other, and since the capacitor element is encapsulated by the UV cured coating having a high heat insulating property and tightly adhering to all surfaces of the capacitor element, not only is the method of the present invention simple and effective to provide the reliable capacitor substantially free from electrolyte leakage, but also the capacitor useable for dip-soldering and less susceptible to reduction in characteristic can be obtained.

BRIEF DESCRIPTION OF THE DRAWINGS

These and other objects and features of the present invention will become clear from the following description taken in conjunction with a preferred embodiment thereof with reference to the accompanying drawings, in which:

Fig. 1 is a perspective view of the prior art chip-type aluminum electrolyte capacitor (already referred to);

Fig. 2 is a cross-sectional view taken along the line A-A in Fig. 1;

Fig. 3, consisting of Figs. 3(a) to 3(d), illustrates the sequence of manufacture of the capacitor of Fig. 1 according to the prior art method;

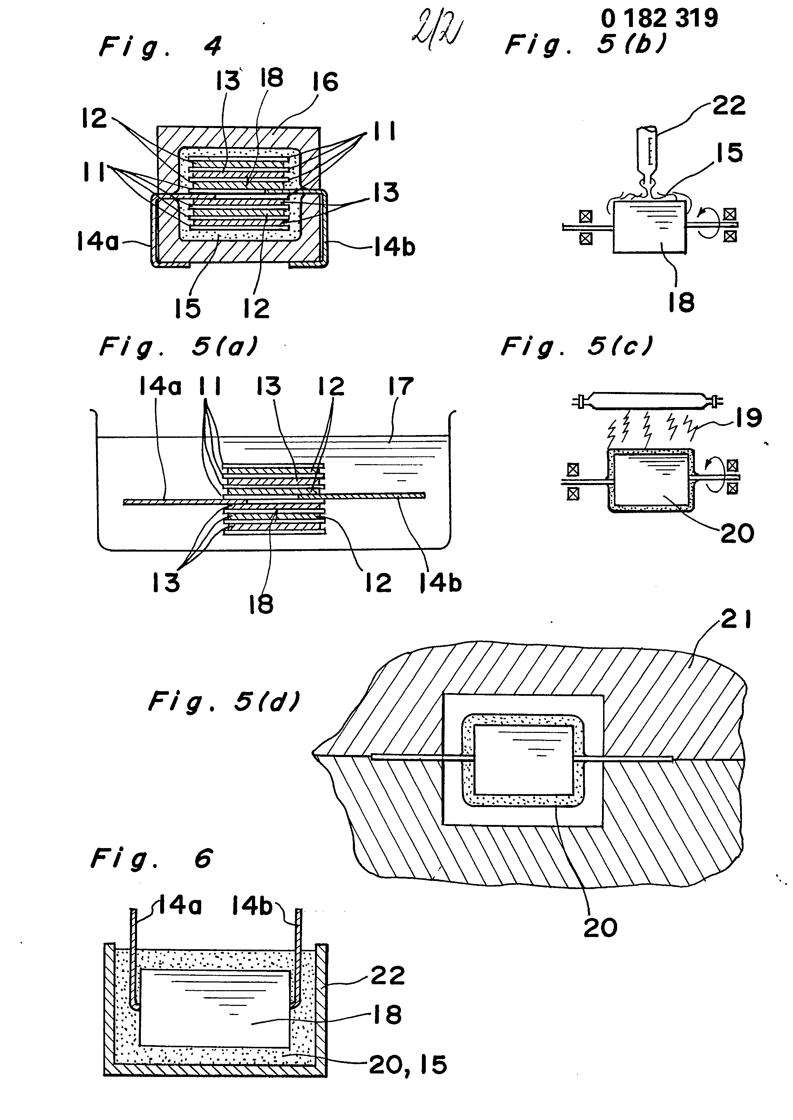

Fig. 4 is a view similar to Fig. 2, showing a chip-type aluminum electrolytic capacitor according to the present invention;

Fig. 5, consisting of Figs. 5(a) to 5(d), illustrates the sequence of manufacture of the capacitor of Fig. 4 according to a method of the present invention; and

Fig. 6 is a sectional view showing another method of coating a UV curable material employable in the practice of the method of the present invention.

DETAILED DESCRIPTION OF THE EMBODIMENT

Referring first to Fig. 4, a chip-type aluminum electrolytic capacitor embodying the present invention comprises a capacitor element 18 having a pair of electro-conductive leads 14a and 14b made of aluminum and extending outwardly from the capacitor element 18 in opposite directions away from each other. The capacitor element 18 comprises a coil of a three-layered strip constituted by a pair of aluminum foils 12 and 13 and a separator 11 sandwiched between the aluminum foils 12 and 13, with the electroconductive leads 14a and 14b connected respectively with the aluminum foils 12 and 13. The aluminum foils 12 and 13 serve as anode and cathode electrodes, respectively, and the separator 11 used in the practice of the present invention is impregnated with electrolyte.

The capacitor element 18 is completely covered by a UV cured coating 15 having an excellent heat insulating property, and a casing 16 of thermosetting resin of high heat resistance overlaying the UV cured coating 15 with the leads 14a and 14b drawn outwards. The leads 14a and 14b so drawn outwards are bent to extend along the opposite end faces of the capacitor and again bent inwardly so as to extend along the bottom of the capacitor in a direction close towards each other, terminating in spaced relationship with each other to permit the capacitor to be face-bonded on any known printed circuit board.

The capacitor of the above described construction can be manufactured in the method which will now be described with particular reference to Fig. 5.

The capacitor element 18 is formed by winding a three-layered strip including the aluminum foils 12 and 13 with the separator 11 sandwiched therebetween while the aluminum leads 14a and 14b are drawn outwards. The capacitor element so formed in coil form is immersed in a bath of electrolyte 17, as shown in Fig. 5(a), to allow the turns of the separator 11 to soak up the electrolyte. The electrolyte 17 contains, as its main ingredient, ethylene glycol. After the leads 14a and 14b of the capacitor element 18 then removed out of the electrolyte bath have been rinsed to remove residue of the electrolyte, a liquid UV curable composition containing, as its main ingredient, acrylate, epoxy resin or silicone rubber, preferably epoxy acrylate, and having an excellent heat insulating property in cured state is flow-dispensed onto the capacitor element 18 except for the leads 14a and 14b while the capacitor element 18 is rotated about its longitudinal axis immediately below a dispenser 22 for the UV curable composition, as shown in Fig. 5(b). The capacitor element 18 wetted with the UV curable composition is subsequently irradiated with UV light 19, as shown in Fig. 5(c), to cause the coated UV curable composition to be photocured to complete the UV cured coating 15.

The assembly 20, i.e., the capacitor element 18 with the UV cured coating 15, is placed in a molding cavity defined in a mold assembly 21 and is then encased by an enclosure of thermosetting resin such as, for example, epoxy resin or polyimide, by the use of a transfer molding technique, which enclosure completes the casing 16, as shown in Fig. 5(d). The complete capacitor can be obtained by subsequently bending the leads 14a and 14b to bring the free ends thereof to the bottom of the body of the capacitor as shown in Fig. 4.

In the foregoing embodiment, the application of the liquid UV curable composition has been described as carried out by the use of the flow-dispensing technique while the capacitor element 18 is rotated about its longitudinal axis. The method of the application of the UV curable composition may not be limited to that shown in and described with reference to Figs. 5(a) and 5(b), but a potting technique may be employed for the formation of the UV cured coating 20, such as shown in Fig. 6.

With reference to Fig. 6, the capacitor element 18 having the separator 11 impregnated with the electrolyte 17 is placed inside a molding vessel 22, and the liquid UV curable composition is subsequently potted in the molding vessel 22 so as to encapsulate the capacitor element 18. Where this potting technique is employed, the capacitor element 18 before being placed inside the molding vessel 22 is preferred to have its leads 14a and 14b bent at right angles to the longitudinal sense of the body of the capacitor element 18 so that, when it is placed inside the molding vessel 22, the leads 14a and 14b can extend upwards out of the molding vessel 22 as shown. The molding vessel 22 may, after the potting to form the UV cured coating 15, be used for the production of the next succeeding capacitor.

From the foregoing description, it has now become clear that the curing of the UV curable composition completes in a matter of seconds and the temperature at which the curing takes place is very low as compared with the boiling point of the electrolyte used. Therefore, not only is there no possibility of the occurrence of evaporation of the electrolyte inside the capacitor, but no operating characteristic of the chip-type aluminum electrolytic capacitor will be adversely affected.

Moreover, the UV cured coating 15 has such a heat insulating property enough to permit it to avoid the transmission to the capacitor element 18 of heat evolved during the subsequent transfer molding process to form the thermoset casing 16, and also has an excellent affinity to the aluminum leads 14a and 14b to such an extent as to exhibit good adhesion.

**0 182 319**

Although the present invention has been fully described by way of example with reference to the accompanying drawings, it is to be noted here that various changes and modifications will be apparent to those skilled in the art. By way of example, the aluminum leads 14a and 14b may have terminal members soldered thereto, respectively, as is the case with the prior art capacitor best shown in Fig. 2. In this case, the soldering of any one of the terminal members to the respective aluminum leads 14a or 14b at a location where the electrolyte 17 is present should be avoided because a localized battery will be produced.

Thus, such changes and modifications are to be understood as included within the scope of the present invention as defined by the appended claims unless they depart therefrom.

What is claimed is:

1.    An aluminum electrolytic capacitor comprising a capacitor element constituted by a coil of aluminum foils and an electrolyte-impregnated separator sandwiched between the aluminum foils, said capacitor element having a pair of electroconductive members connected at one end with the respective aluminum foils, a UV cured coating covering the capacitor element with the electroconductive members extending outwardly of the UV cured coating, and a casing made of thermosetting resin and encasing the capacitor element together with the UV cured coating, said electroconductive members extending outwards through the casing for external electric connection.

2.    The capacitor as claimed in Claim 1, wherein the UV cured coating is made of epoxy acrylate.

3.    The capacitor as claimed in Claim 1, wherein the UV cured coating is molded into a generally rectangular box-like configuration.

4.    The capacitor as claimed in Claim 3, wherein the electroconductive members are bent so as to terminate at the bottom of the capacitor in spaced relation to each other.

5.    A method for manufacturing an aluminum electrolytic capacitor, comprising the steps of:

applying a liquid UV curable material to a capacitor element so as to cover the element completely, said element comprising a coil of aluminum foils with an electrolyte-impregnated separator sandwiched between the aluminum foils, and a pair of electroconductive members connected at one end with the respective aluminum foils, said electroconductive members being left uncoated with the UV curable material;

curing the UV curable material with irradiation of UV light to form the UV cured coating enclosing the capacitor element except for the electroconductive members; and

encasing the capacitor element, covered by the UV cured coating, in a casing of thermosetting resin.

6. The method as claimed in Claim 5, wherein the step of encasing is carried out by placing the capacitor element in a transfer molding assembly, injecting the thermosetting resin into the assembly so as to completely cover the element exteriorly of the UV cured coating except for the electroconductive members, and solidifying the injected thermosetting resin.

Fig. 1
Prior Art

Fig. 2
Prior Art

Fig. 3(a)
Prior Art

Fig. 3(c)
Prior Art

Fig. 3(b)
Prior Art

Fig. 3(d)
Prior Art

Fig. 4

Fig. 5(b)

0 182 319

2/2

Fig. 5(a)

Fig. 5(c)

Fig. 5(d)

Fig. 6